## Europäisches Patentamt
## European Patent Office
## Office européen des brevets

(19)

(11) Numéro de publication : **0 035 295**
**B1**

(12)
# FASCICULE DE BREVET EUROPÉEN

(45) Date de publication du fascicule du brevet :
22.06.83

(51) Int. Cl.³ : **H 04 L   7/02**

(21) Numéro de dépôt : **81200167.5**

(22) Date de dépôt : **12.02.81**

(54) **Procédé de réglage de la phase de l'horloge d'un système de réception de données numériques, circuit de récupération de phase pour la mise en oeuvre de ce procédé, et système de réception de données numériques comprenant ce circuit.**

(30) Priorité : **27.02.80 FR 8004324**

(43) Date de publication de la demande :
**09.09.81 Bulletin 81/36**

(45) Mention de la délivrance du brevet :
**22.06.83 Bulletin 83/25**

(84) Etats contractants désignés :
**DE FR GB SE**

(56) Documents cités :
**US A 3 047 660**
**US A 3 404 232**
**OPTICAL COMMUNICATION CONFERENCE PROCEEDINGS, septembre 1979 Amsterdam NL G. BAACK et al. : « Optical transmission of 16 digitized TV-channels » pages 20.2-1 à 20.2-3**

(73) Titulaire : **Laboratoires d'Electronique et de Physique Appliquee L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB SE**

(72) Inventeur : **Rouffet, Denis**
**Société Civile S.P.I.D. 209 rue de l'Université**
**F-75007 Paris (FR)**

(74) Mandataire : **Landousy, Christian et al**
**Société Civile S.P.I.D. 209, Rue de l'Université**
**F-75007 Paris (FR)**

**0 035 295**

Procédé de réglage de la phase de l'horloge d'un système de réception de données numériques,
circuit de récupération de phase pour la mise en œuvre de ce procédé, et système de réception
de données numériques comprenant ce circuit

La présente invention concerne les systèmes de réception de données numériques transmises, après modulation linéaire, par l'intermédiaire d'un canal éventuellement variable dans le temps et à bande passante limitée, ce canal pouvant donc introduire des distorsions de son signal de sortie par rapport à son signal d'entrée constitué par la séquence des données émises toutes les T secondes.

De tels systèmes comprennent en général essentiellement un circuit de filtrage du signal de sortie du canal, suivi d'un circuit de décision destiné à estimer et reconstruire à partir du signal de sortie du circuit de filtrage chacune des données numériques émises à l'entrée du canal. Ces estimations doivent intervenir au rythme d'une horloge dont la fréquence et la phase sont fournies par un circuit de récupération de rythme permettant une décision qui minimise le taux d'erreur. L'invention ici décrite concerne en fait, plus précisément, le circuit de récupération de phase prévu dans ce circuit de récupération de rythme.

L'importance de ce problème de synchronisation par récupération de fréquence et de phase est capitale pour la qualité de la transmission des données. Il est en effet indispensable, pour que le système de réception restitue aussi correctement que possible l'information émise à l'entrée du canal, qu'il soit en mesure de déceler les instants les plus significatifs du signal de sortie du canal ; cette possibilité est à l'heure actuelle obtenue grâce à l'horloge mentionnée plus haut et dont un réglage permet à la réception une synchronisation avec l'horloge de l'émetteur. Mais les systèmes réalisés de cette façon fonctionnent mal quand la fonction de transfert du canal varie dans le temps.

Dans cette dernière hypothèse, le brevet français n° 73 40 556 de la Société COMPAGNIE IBM FRANCE tente de proposer un système de réception de données, transmises, dans l'exemple considéré, par modulation de phase différentielle à plusieurs niveaux. Dans ce système, on génère par corrélation, à partir du signal en ligne et des informations détectées, un signal représentant l'enveloppe des signaux éléments utilisés dans la transmission ou éventuellement, en variante, le carré de cette enveloppe. Dans cet exemple, le signal en ligne est exprimé par la relation :

$$r(t) = \sum_k \rho_k [S_1(t - kT) \cos \phi_k + S_2(t - kT) \sin \phi_k] \qquad (1)$$

où $S_1(t)$ est le signal, que l'on appelle couramment signal élément, résultant de la modulation d'une porteuse $\omega_c$ par le signal en bande de base g(t) soit $S_1(t) = g(t) \cos \omega_c t$ ; $S_2(t)$ est le signal en quadrature de phase sur $S_1(t)$ soit $S_2(t) = g(t) \sin \omega_c t$ ; et où $\rho_k$ et $\phi_k$ sont les valeurs discrètes de phase et d'amplitude utilisées pour coder les données aux instants kT (T étant la période de transmission des données), valeurs prises dans l'ensemble des valeurs discrètes $\{\rho_j\}$ et $\{\phi_j\}$ utilisées dans la transmission (l'expression (1) indique que le signal en ligne résulte de la superposition d'un grand nombre de signaux correspondant aux éléments d'information successivement transmis, et traduit ce que l'on appelle communément l'interférence entre symboles). Le signal enveloppe du signal élément transmis est alors défini par la relation :

$$R(t) = \sqrt{S_1^2(t) + S_2^2(t)} . \qquad (2)$$

Sur la courbe représentative de la forme du signal enveloppe ainsi défini, on définit deux (ou plusieurs) points également distants d'un point de référence temporelle déterminé, et l'information permettant le réglage de l'horloge à la réception est constituée par l'écart d'amplitude entre ces deux points de la courbe (ou, dans le cas de plusieurs points, par l'écart de position du centre de gravité de ces points par rapport à une position de référence). Les essais et simulations réalisés montrent que la réception des données transmises semble optimale lorsque cet écart s'annule.

Le système décrit dans ce brevet n° 73 40 556 présente cependant de notables inconvénients. D'une part, le principe adopté pour l'annulation de l'écart de phase autorise une synchronisation accidentelle de l'horloge sur un extremum de la courbe (et non pas seulement sur un maximum), ce qui ne conduit pas à l'optimisation recherchée. D'autre part, le système fonctionne à l'aide de boucles de rétroaction comprenant des égaliseurs adaptatifs et est relativement lent à converger ; on sait aussi que de tels systèmes adaptatifs ont d'une façon générale pour inconvénient majeur leur complexité, qui les rend difficilement utilisables à des cadences de transmission très élevées. On peut enfin remarquer que l'absence de filtrage en sortie du canal de transmission ne garantit pas que le principe proposé puisse être appliqué, la présence d'un véritable maximum n'étant pas certaine.

Un but essentiel de l'invention est au contraire de proposer un procédé et un circuit de récupération de phase qui, tout en bénéficiant d'un temps de réponse court, soit d'une structure plus simple que les réalisations antérieures connues.

L'invention concerne à cet effet, dans un système de réception de données numériques tel que défini précédemment, un procédé de réglage de la phase de l'horloge de circuit de décision caractérisé en ce qu'il comprend les étapes suivantes :

(A) imposer au circuit de filtrage une fonction de transfert telle que ce circuit élimine du spectre de fréquences reçu ou rend négligeables les fréquences supérieures à 1/T et que l'énergie moyenne de son signal de sortie ne soit donc plus définie, en fonction du temps t et de la période T de transmission des données émises à l'entrée du canal, que par une expression du type $E = A + B \cdot \cos 2\pi\, t/T$, A et B étant deux coefficients réels positifs constants ou lentement variables ;

(B) évaluer l'écart de phase $\phi_E$ entre la valeur $\phi_M = 2\pi\, t_M/T$ qui rend maximale l'expression de E et la valeur $\phi = 2\pi t/T$ correspondant à la valeur de l'énergie moyenne du signal de sortie du circuit de filtrage à un instant d'échantillonnage avant le réglage de phase de l'horloge ;

(C) décaler les instants de décision fixés par l'horloge d'une durée $t_E = (\phi - \phi_M)\, T/2\pi$ considérée avec son signe.

En effet, une analyse mathématique rapide, précisée plus loin, conduit à un choix particulier des conditions de filtrage et, de là, à une détermination devenue extrêmement simple de l'écart de phase, à savoir par la résolution d'un système de quelques équations trigonométriques.

Le circuit de récupération de phase pour la mise en œuvre du procédé décrit ci-dessus comprend donc un circuit de filtrage passe-bas, pour la mise en œuvre de l'étape (A) de ce procédé, et un circuit d'évaluation et de déphasage, pour la mise en œuvre de l'étape (B) et celle de l'étape (C).

Deux modes de réalisation principaux peuvent être envisagés pour le circuit d'évaluation et de déphasage, selon que la transmission numérique s'effectue à débit lent ou rapide.

Dans le premier cas, le circuit d'évaluation et de déphasage selon l'invention est caractérisé en ce qu'il comprend successivement :

(A) un élévateur au carré destiné à recevoir le signal de sortie du circuit de filtrage passe-bas ;

(B) des premier, deuxième, troisième et quatrième échantillonneurs en parallèle destinés à recevoir chacun le signal de sortie de l'élévateur au carré et dont les instants d'échantillonnage sont régulièrement espacés de T/4 ;

(C) des premier et deuxième sommateurs destinés à recevoir sur une première entrée positive, respectivement les signaux de sortie des premier et troisième échantillonneurs et, sur une deuxième entrée négative, respectivement les signaux de sortie des deuxième et quatrième échantillonneurs ;

(D) des premier et deuxième multiplicateurs destinés à recevoir, sur une première entrée, respectivement le signal de sortie du premier sommateur et celui du deuxième sommateur, chacun par l'intermédiaire d'un intégrateur et d'un amplificateur placés en série ;

(E) un oscillateur local destiné à fixer l'instant d'échantillonnage du premier échantillonneur, puis, à l'aide d'un déphaseur de $\pi/2$, celui du deuxième échantillonneur, ces signaux de sortie de l'oscillateur et du déphaseur étant également envoyés vers la deuxième entrée respectivement du deuxième multiplicateur et du premier multiplicateur, puis à l'aide de deux inverseurs, ceux des troisième et quatrième échantillonneurs respectivement ;

(F) un additionneur destiné à recevoir le signal de sortie de chacun des premier et deuxième multiplicateurs, le signal de sortie de cet additionneur étant envoyé vers l'horloge de l'étape de décision.

Dans le deuxième cas d'un système à débit rapide, la réalisation d'échantillonneurs devient de plus en plus critique, et une structure à lignes à retard est préférée à la solution précédente. Le circuit d'évaluation et de déphasage selon l'invention est alors caractérisé en ce qu'il comprend successivement :

(A) un élévateur au carré destiné à recevoir le signal de sortie du circuit de filtrage passe-bas ;

(B) un premier sommateur destiné à recevoir sur une première entrée positive le signal de sortie de l'élévateur au carré et sur une deuxième entrée négative ce même signal de sortie mais par l'intermédiaire d'une ligne à retard égal à T/2, et un deuxième sommateur destiné à recevoir sur une première entrée positive le signal de sortie de l'élévateur au carré par l'intermédiaire d'une ligne à retard égal à T/4 et sur une deuxième entrée négative ce même signal de sortie mais par l'intermédiaire d'une ligne à retard égal à 3T/4 ;

(C) des premier et deuxième multiplicateurs destinés à recevoir, sur une première entrée, respectivement le signal de sortie du premier sommateur et celui du deuxième sommateur, chacun par l'intermédiaire d'un échantillonneur et d'un intégrateur placés en série, les instants d'échantillonnage des premier et deuxième échantillonneurs étant espacés de T/2 ;

(D) un oscillateur local fixant l'instant d'échantillonnage du premier échantillonneur puis, à l'aide d'un inverseur, celui du deuxième échantillonneur ;

(E) un déphaseur de $\pi/2$ du signal de sortie de l'oscillateur, le signal de sortie de ce déphaseur et celui de l'oscillateur qui est délivré au premier échantillonneur étant envoyés vers la deuxième entrée respectivement du premier multiplicateur et du deuxième multiplicateur ;

(F) un additionneur destiné à recevoir le signal de sortie de chacun des premier et deuxième multiplicateurs, le signal de sortie de cet additionneur étant envoyé vers l'horloge de l'étage de décision.

Dans les deux variantes de réalisation ainsi proposées, le choix judicieux des échantillons du signal de sortie du circuit de filtrage, leur combinaison et leur traitement pour déterminer progressivement à partir de la connaissance de l'énergie moyenne de ce signal la valeur de l'angle $\phi$ exprimant l'écart de phase à supprimer, permettent d'effectuer le réglage voulu à l'aide d'un circuit qui reste très simple, qui est indépendant du circuit prévu pour la récupération de fréquence de l'horloge, et dont la convergence est excellente.

D'autres particularités et avantages de l'invention apparaîtront dans la description détaillée qui va

·suivre et dans les dessins annexés, donnés à titre d'exemples non limitatifs et dans lesquels :

la figure 1 est une courbe montrant les variations de l'énergie moyenne du signal de sortie d'un canal de transmission pendant la période de transmission T ;

les figures 2 et 3 montrent de façon très schématique deux systèmes de réception, l'un à structure non adaptative et l'autre à structure adaptative (par système adaptatif, on entend un système générant un signal d'erreur qui est fonction de la différence entre la forme exacte ou estimée des données numériques à leur émission et la forme qu'ils ont en sortie du système adaptatif et rendant cette erreur minimale) ;

les figures 4 et 5 montrent deux exemples de réalisation du circuit de récupération de phase selon l'invention.

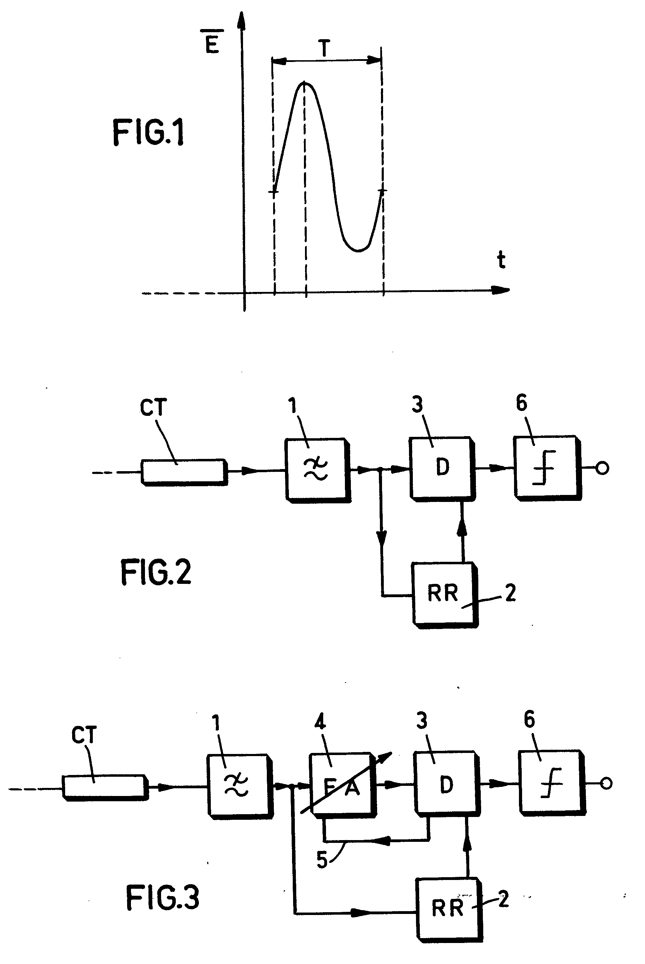

On sait que, dans le domaine de la transmission de données numériques, l'utilisation de filtres ne peut que rarement être évitée. En effet, la courbe représentée sur la figure 1 montre que l'énergie moyenne du signal de sortie d'un canal de transmission, maximale à des instants d'échantillonnage régulièrement répartis et distants d'une durée T égale à celle des données numériques émises, diminue avec une extrême rapidité de part et d'autre de ces instants. Comme il est primordial, pour la qualité de la réception de ces données, de rendre maximal le rapport signal sur bruit à l'instant d'échantillonnage, un étage de filtrage est placé en sortie du canal pour modifier cette courbe de l'énergie reçue d'une manière telle que la recherche de l'instant optimal d'échantillonnage soit réalisable.

Recherchons l'expression de l'énergie moyenne du signal de sortie du canal, en adoptant les notations suivantes :

$T$ = durée d'une donnée numérique (c'est-à-dire d'un symbole) ;

$I_k$ = symbole émis ;

$P_I$ = énergie moyenne de $I_k$ ;

$h(t)$ = réponse impulsionnelle du canal de transmission ;

$h^*(t)$ = réponse impulsionnelle complexe conjuguée ;

$\tau$ = instant d'échantillonnage ;

$x_k$ = donnée reçue ;

$E(.)$ = valeur moyenne de l'expression entre parenthèses.

La suite des données reçues peut être connue grâce à l'expression suivante :

$$X_k(\tau) = \sum_I \left[ h(\tau + IT) \cdot I_{k-I} \right] \tag{1}$$

dont on déduit celle de l'énergie moyenne $E_\tau$ du signal à chaque instant $\tau + kT$ et quel que soit $k$ :

$$E_\tau = \frac{E(X_k^2(\tau))}{P_I} = \sum_I \left[ h(\tau + IT) \cdot h^*(\tau + IT) \right] . \tag{2}$$

La décomposition de $E_\tau$ en série de Fourier donne ($\int$ = intégrale) :

$$E_\tau = \sum_{I=0}^{I=\infty} E_I \cdot \exp\left( -i \frac{2\pi}{T} \cdot I\tau \right) \tag{3}$$

et

$$E_I = \frac{1}{T} \int_0^T E_\tau \cdot \exp\left( +i \frac{2\pi}{T} I\tau \right) \cdot d\tau \tag{4}$$

l'expression (4) devient :

$$E_I = \frac{1}{T} \int_0^T \sum_{j=0}^{j=\infty} h^*(jT + \tau) \cdot h(jT + \tau) \exp\left( -i \frac{2\pi}{T} I\tau \right) d\tau$$

ou encore :

$$E_I = \frac{1}{T} \sum_{j=0}^{j=\infty} \int_{jT}^{(j+1)T} \exp\left( -i \frac{2\pi}{T} I\tau \right) \cdot h(jT + \tau) \cdot h^*(jT + \tau) \cdot d\tau \tag{5}$$

qui devient, après remplacement de $(jT + \tau)$ par $u$ :

$$E_I = \frac{1}{T} \sum_{j=0}^{j=\infty} \int_{jT}^{(j+1)T} \exp\left( -i \frac{2\pi}{T} Iu \right) \cdot h^2(u) \cdot du$$

ou

$$E_I = \frac{1}{T} \int_{-\infty}^{+\infty} h^*(u) \cdot h(u) \cdot \exp\left( -i \frac{2\pi}{T} Iu \right) \cdot du \tag{6}$$

**0 035 295**

ou encore :

$$E_l = \frac{1}{T} \left| H(\omega) * H^*(\omega) \right|_{\omega = \frac{2\pi l}{T}} . \tag{7}$$

Dans cette dernière expression, $H(\omega)$ désigne la transformée de Fourier de $h(u)$ et l'astérisque correspond à l'opérateur de convolution. Comme la bande passante du canal de transmission est limitée, l'expression (7) de l'énergie moyenne reçue ne contient qu'un nombre également limité de termes dans la série de Fourier qui décrit cette énergie. En limitant à deux le nombre de ces termes, à l'aide d'un filtre passe-bas éliminant du spectre reçu ou rendant négligeables les fréquences supérieures à 1/T, et en supposant (par mesure de simplification ne limitant en aucun cas l'invention) que la phase des instants optimaux d'échantillonnage est 0, $2\pi$, $4\pi$, etc..., l'énergie moyenne reçue en sortie du filtre passe-bas E varie en fonction de la position des instants d'échantillonnage selon l'expression suivante :

$$E_\tau = A + B \cdot \cos \frac{2\pi\tau}{T} \tag{8}$$

où A et B sont deux coefficients réels positifs constants ou éventuellement lentement variables dans le temps. L'énergie moyenne reçue a donc, selon les calculs effectués, une expression de type sinusoïdal.

L'expression (8) peut, bien entendu, être décrite de la façon suivante :

$$E_\tau = A + B \cos \phi \tag{9}$$

où $\phi$ représente l'écart de phase entre l'instant optimal d'échantillonnage (pour que l'énergie reçue soit maximale) et l'instant réel d'échantillonnage de l'horloge du système de réception avant réglage de cette horloge conformément à l'invention.

Le procédé pour effectuer ce réglage comprend donc les trois étapes essentielles suivantes :

(A) prévoir en sortie du canal un circuit de filtrage passe-bas éliminant du spectre de fréquences reçu ou rendant négligeables les fréquences supérieures à 1/T, afin de donner à l'énergie moyenne en sortie de ce circuit une expression du type de celle des relations (8) ou (9) ;

(B) associer à ce circuit de filtrage passe-bas un circuit d'évaluation de la valeur de l'écart de phase $\phi$ apparaissant dans la relation (9) ;

(C) associer à ce circuit d'évaluation un circuit de déphasage effectuant d'après cette valeur de $\phi$ le réglage voulu de l'horloge.

Deux exemples de réalisation d'un circuit de récupération de phase permettant la mise en œuvre de ce procédé vont être maintenant décrits. En se référant d'abord aux figures 2 et 3, on précisera cependant que, quelle que soit la structure du mode de réalisation retenu pour le circuit selon l'invention, ce circuit s'insère indifféremment dans les systèmes de réception de données numériques adaptatifs ou non adaptatifs.

La figure 2, qui représente schématiquement un système à structure non adaptative, montre successivement, en sortie du canal de transmission CT :

(a) le circuit de filtrage passe-bas 1 ;

(b) un circuit de récupération de rythme 2 ;

(c) le circuit de décision 3, placé en parallèle avec ce circuit 2 de façon à recevoir comme lui le signal de sortie du circuit de filtrage 1, et recevant en outre le signal de sortie du circuit 2, aux fins de réglage de l'horloge de ce circuit de décision.

Un système à structure adaptative, tel que celui de la figure 3, comprend en outre, par rapport au schéma de la figure 2, un filtre adaptatif 4 inséré entre le point commun à la sortie du circuit de filtrage 1 et à l'entrée du circuit 2 de récupération de rythme et l'entrée du circuit de décision 3. L'adaptation de ce filtre est effectuée par l'intermédiaire d'une connexion de rétroaction 5 prélevant un signal d'erreur en sortie du circuit de décision 3. Qu'il soit adaptatif ou non, le système peut enfin comprendre un circuit de régénération 6 placé en sortie du circuit 3 et assurant la mise en forme définitive des signaux de sortie du système de réception.

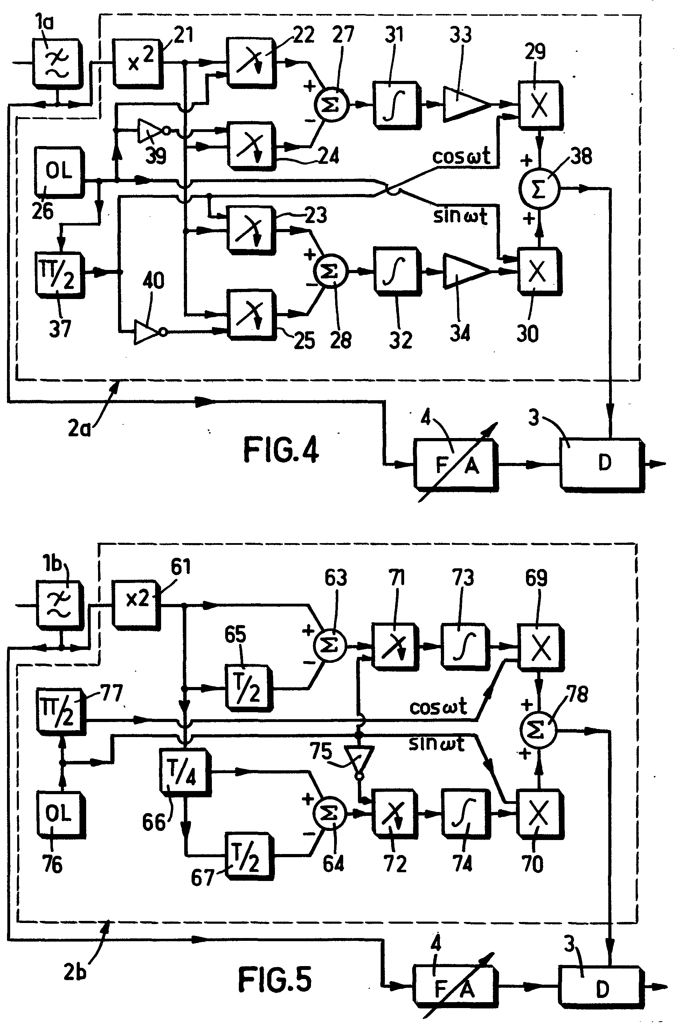

Le premier exemple de réalisation du circuit de récupération de phase selon l'invention est décrit en référence à la figure 4 et comprend donc un circuit de filtrage 1a, suivi d'un circuit d'évaluation et de déphasage 2a. On a vu ci-dessus que le circuit de filtrage 1a est un filtre passe-bas éliminant du spectre reçu ou rendant négligeables les fréquences supérieures à 1/T, et dont la mise en place permet de disposer, en sortie du circuit de filtrage, d'un signal de sortie dont l'énergie moyenne est de type sinusoïdal ($A + B \cdot \cos \phi$ ou $A + B \cdot \sin \phi$). On supposera dans toute la suite de la description, à titre d'exemple non limitatif, que la référence de temps est choisie de façon que cette énergie moyenne soit définie, en fonction du temps t et de la période T, par l'expression :

$$E = A + B \cdot \sin (2\pi \, t/T) \tag{10}$$

dans laquelle A et B sont deux coefficients réels positifs constants, ou lentement variables si le canal et sa fonction de transfert évoluent dans le temps.

5

0 035 295

Le circuit d'évaluation et de déphasage 2a comprend, lui, les éléments suivant 21 à 40. Tout d'abord, un élévateur au carré 21 reçoit le signal de sortie du circuit de filtrage 1a et délivre un signal proportionnel à l'énergie moyenne de ce signal de sortie. Quatre échantillonneurs 22, 23, 24 et 25, reçoivent chacun le signal de sortie de l'élévateur au carré 21. Leurs instants d'échantillonnage $\tau_1$, $\tau_2$, $\tau_3$, $\tau_4$, fixés par un oscillateur local 26 sont régulièrement espacés de T/4, de sorte que les relations suivantes sont vérifiées :

$$E_{\tau_1} = A + B \cdot \sin (2\pi \, \tau_1/T) \qquad\qquad (11)$$
$$= A + B \cdot \sin \phi \qquad\qquad (11 \text{ bis})$$
$$E_{\tau_2} = A + B \cdot \sin [2\pi \, (\tau_1 + T/4)/T] \qquad\qquad (12)$$
$$= A + B \cdot \cos \phi \qquad\qquad (12 \text{ bis})$$
$$E_{\tau_3} = A + B \cdot \sin [2\pi \, (\tau_1 + T/2)/T] \qquad\qquad (13)$$
$$= A - B \cdot \sin \phi \qquad\qquad (13 \text{ bis})$$
$$E_{\tau_4} = A + B \cdot \sin [2\pi \, (\tau_1 + 3T/4)/T] \qquad\qquad (14)$$
$$= A - B \cdot \cos \phi \qquad\qquad (14 \text{ bis})$$

Par combinaison des relations 11 à 14 (ou 11 bis à 14 bis) il va maintenant être possible de déterminer l'écart de phase $\phi_E$ défini dans l'étape (B) du procédé selon l'invention. Un premier sommateur 27 reçoit, sur une première entrée positive, le signal de sortie de l'échantillonneur 22 et, sur une deuxième entrée négative, le signal de sortie de l'échantillonneur 24 ; de même, un deuxième sommateur 28 reçoit, sur une entrée positive, le signal de sortie de l'échantillonneur 23 et, sur une entrée négative, le signal de sortie de l'échantillonneur 25. Deux multiplicateurs 29 et 30 reçoivent, sur une première entrée, respectivement le signal de sortie du premier sommateur 27 par l'intermédiaire d'un intégrateur 31 et d'un amplificateur 33 placés en série, et le signal de sortie du deuxième sommateur 28 par l'intermédiaire d'un intégrateur 32 et d'un amplificateur 34 également placés en série.

L'oscillateur 26 fixe donc l'instant d'échantillonnage $\tau_1$ du premier échantillonneur (sortie directe de l'oscillateur) et, par l'intermédiaire d'un déphaseur 37 de $\pi/2$, l'instant d'échantillonnage $\tau_2$. Ces signaux de sortie de l'oscillateur 26 et du déphaseur 37 sont également envoyés vers la deuxième entrée respectivement du deuxième multiplicateur 30 et du premier multiplicateur 29. Ces signaux de sortie sont aussi envoyés vers deux inverseurs 39 et 40, dont les signaux de sortie permettent de fixer les instants d'échantillonnage $\tau_3$ et $\tau_4$. Un additionneur 38 reçoit le signal de sortie du premier multiplicateur 29 (si $\omega$ est la pulsation de l'oscillateur 26, et $\sin \omega t$ son signal de sortie en sortie directe, ce signal de sortie du premier multiplicateur est proportionnel au produit $\sin \phi \cdot \cos \omega t$) et celui du deuxième multiplicateur 30 (proportionnel à $\cos \phi \cdot \sin \omega t$) et délivre un signal de sortie qui, selon la formule trigonométrique d'addition connue, est proportionnel à $\sin (\omega t + \phi)$ et est envoyé vers l'horloge du circuit de décision ; le réglage de celle-ci conformément à l'invention est terminé.

Le circuit de récupération de phase qui vient d'être décrit convient pour les systèmes de réception de données numériques à débit modéré. Dans le cas de systèmes à débits rapides, le problème de l'échantillonnage devient critique, et l'on préfère remplacer les échantillonneurs par des lignes à retard.

Le deuxième exemple de réalisation du circuit de récupération de phase, prévu pour des débits rapides et décrit en référence à la figure 5, comprend alors un circuit de filtrage 1b, identique au circuit 1a, et un circuit d'évaluation et de déphasage 2b, composé des éléments 61 à 78 et dont la structure est la suivante. Entre la sortie d'un élévateur au carré 61 et deux sommateurs 63 et 64 sont prévues, comme précédemment, quatre voies en parallèle. Le premier sommateur 63 reçoit sur une première entrée positive le signal de sortie de l'élévateur au carré 61 et, sur une deuxième entrée négative, ce même signal de sortie mais par l'intermédiaire d'une ligne à retard 65, à retard égal à T/2. Le deuxième sommateur 64 reçoit sur une première entrée positive le signal de sortie de l'élévateur au carré 61, par l'intermédiaire d'une ligne à retard 66 à retard égal à T/4, et sur une deuxième entrée négative le signal de sortie de la ligne à retard 66 par l'intermédiaire d'une autre ligne à retard 67, à retard égal à T/2 (le retard global du signal atteignant cette deuxième entrée négative du sommateur 64 est donc égal à 3T/4).

Deux multiplicateurs 69 et 70 reçoivent, sur une première entrée, respectivement le signal de sortie du premier sommateur 63 par l'intermédiaire d'un échantillonneur 71 et d'un intégrateur 73 placés en série, et le signal de sortie du deuxième sommateur 64 par l'intermédiaire d'un échantillonneur 72 et d'un intégrateur 74 également placés en série. Un oscillateur local 76 fixe l'instant d'échantillonnage de l'échantillonneur 71 puis, à l'aide d'un inverseur 75, celui de l'échantillonneur 72. Enfin, le signal de sortie de l'oscillateur 76 (délivré au premier échantillonneur 71) et le signal de sortie d'un déphaseur 77 (de $\pi/2$ également) de ce signal de sortie de l'oscillateur sont envoyés vers la deuxième entrée respectivement du deuxième multiplicateur 70, dont le signal de sortie est donc proportionnel à $\sin \omega t \cdot \cos \phi$, et du premier multiplicateur 69, dont le signal de sortie est proportionnel à $\cos \omega t \cdot \sin \phi$, un additionneur 78 recevant le signal de sortie de chacun de ces multiplicateurs et délivrant un signal de sortie proportionnel à $\sin (\omega t + \phi)$, qui est envoyé vers l'horloge du circuit de décision.

Bien entendu, la présente invention n'est pas limitée aux exemples de réalisation ci-dessus décrits et représentés, à partir desquels on peut prévoir des variantes sans pour cela sortir du cadre de l'invention. Une telle variante peut consister à prévoir un circuit de récupération de phase comprenant, au lieu de quatre voies, un nombre n de voies en parallèle différent, ce circuit permettant alors la résolution d'un système d'équations trigonométriques en nombre également différent ; si l'on considère par exemple le

6

cas où n = 3, le circuit ne comporte que trois voies en parallèle comprenant respectivement des premier, deuxième et troisième échantillonneurs dont les instants d'échantillonnage sont espacés de T/3.

Si la transmission s'effectue à débit relativement lent, il est même possible de ne prévoir qu'un seul échantillonneur, suivi d'un commutateur assurant la liaison de cet échantillonneur avec successivement chacune des n voies en parallèle, au rythme de l'horloge fixant les instants d'échantillonnage. Dans l'exemple de réalisation décrit précédemment, où n = 4, on peut, au lieu d'échantillonner à des instants régulièrement espacés de T/4, ne plus échantillonner qu'à des instants espacés de 5T/4 et obtenir le même système de quatre équations trigonométriques, particulièrement simple à résoudre.

**Revendications**

1. Procédé de réglage de la phase de l'horloge du circuit de décision d'un système de réception de données numériques transmises, après modulation linéaire, par l'intermédiaire d'un canal (CT) éventuellement variable dans le temps et à bande passante limitée, ce système comprenant essentiellement un circuit de filtrage (1) du signal de sortie du canal suivi d'un circuit de décision (3) destiné à effectuer, à partir du signal de sortie du circuit de filtrage et au rythme d'une horloge associée à ce circuit de décision et dont la fréquence et la phase sont déterminées par un circuit de récupération (2) de rythme permettant une décision qui minimise le taux d'erreur, une estimation et une reconstruction de chacune des données numériques émises à l'entrée du canal, caractérisé en ce que le procédé comprend les étapes suivantes :

(A) imposer au circuit de filtrage une fonction de transfert telle que ce circuit élimine du spectre de fréquences reçu ou rend négligeables les fréquences supérieures à 1/T et que l'énergie moyenne de son signal de sortie ne soit donc plus définie, en fonction du temps t et de la période T de transmission des données émises à l'entrée du canal, que par une expression du type $E = A + B \cdot \cos 2\pi t/T$, A et B étant deux coefficients réels positifs constants ou lentement variables :

(B) évaluer l'écart de phase $\phi_E$ entre la valeur $\phi_M = 2\pi t_M/T$ qui rend maximale l'expression de E et la valeur $\phi = 2\pi t/T$ correspondant à la valeur de l'énergie moyenne du signal de sortie du circuit de filtrage à un instant t d'échantillonnage avant le réglage de phase de l'horloge ;

(C) décaler les instants de décision fixés par l'horloge d'une durée $t_E = (\phi - \phi_M) T/2$ considérée avec son signe.

2. Circuit de récupération de phase pour la mise en œuvre du procédé selon la revendication 1, caractérisé en ce qu'il comprend :

(A) un circuit de filtrage passe-bas (1) à fonction de transfert telle que ce circuit élimine du spectre de fréquences reçu ou rend négligeables les fréquences supérieures à 1/T et que l'énergie moyenne de son signal de sortie n'est donc plus définie, en fonction du temps t et de la période T de transmission des données émises à l'entrée du canal, que par une expression du type $E = A + B \cdot \cos 2\pi t/T$, A et B étant deux coefficients réels positifs constants ou lentement variables ;

(B) un circuit d'évaluation pour déterminer l'écart de phase $\phi_E$ entre la valeur $\phi_M = 2\pi t_M/T$ qui rend maximale l'expression de E et la valeur $\phi = 2\pi t/T$ correspondant à la valeur de l'énergie moyenne du signal de sortie du circuit de filtrage à un instant t d'échantillonnage avant le réglage de phase de l'horloge et ;

(C) un circuit de déphasage pour décaler les instants de décision fixés par l'horloge d'une durée $t_E = (\phi - \phi_M) T/2\pi$ considérée avec son signe.

3. Circuit de récupération de phase selon la revendication 2, caractérisé en ce que le circuit d'évaluation et de déphasage (2a) comprend successivement :

(A) un élévateur au carré (21) destiné à recevoir le signal de sortie du circuit de filtrage passe-bas (1a) ;

(B) des premier, deuxième, troisième et quatrième échantillonneurs (22, 23, 24, 25) en parallèle destinés à recevoir chacun le signal de sortie de l'élévateur au carré (21) et dont les instants d'échantillonnage sont régulièrement espacés de T/4 ;

(C) des premier et deuxième sommateurs (27, 28), destinés à recevoir sur une première entrée positive respectivement les signaux de sortie des premier et deuxième échantillonneurs (22, 23) et, sur une deuxième entrée négative, respectivement les signaux de sortie des troisième et quatrième échantillonneurs (24, 25) ;

(D) des premier et deuxième multiplicateurs (29, 30) destinés à recevoir, sur une première entrée, respectivement le signal de sortie du premier sommateur (27) et celui du deuxième sommateur (28), chacun par l'intermédiaire d'un intégrateur (31 ou 32) et d'un amplificateur (33 ou 34) placés en série ;

(E) un oscillateur local (26) destiné à fixer l'instant d'échantillonnage du premier échantillonneur (22), puis, à l'aide d'un déphaseur (37) de $\pi/2$, celui du deuxième échantillonneur (23), ces signaux de sortie de l'oscillateur (26) et du déphaseur (37) étant également envoyés vers la deuxième entrée respectivement du deuxième multiplicateur (30) et du premier multiplicateur (29), puis, à l'aide de deux inverseurs (39, 40), ceux des troisième et quatrième échantillonneurs (24, 25) respectivement ;

(F) un additionneur (38) destiné à recevoir le signal de sortie de chacun des premier et deuxième multiplicateurs (29, 30), le signal de sortie de cet additionneur étant envoyé vers l'horloge du circuit de décision (3).

7

4. Circuit de récupération de phase selon la revendication 2, caractérisé en ce que le circuit d'évaluation et de déphasage comprend successivement :

(A) un élévateur au carré (61) destiné à recevoir le signal de sortie du circuit de filtrage passe-bas (1b) ;

(B) un premier sommateur (63) destiné à recevoir sur une première entrée positive le signal de sortie de l'élévateur au carré (61) et sur une deuxième entrée négative ce même signal de sortie mais par l'intermédiaire d'une ligne à retard (65) égal à T/2, et un deuxième sommateur (64) destiné à recevoir sur une première entrée positive le signal de sortie de l'élévateur au carré (61) par l'intermédiaire d'une ligne à retard (66) égal à T/4 et sur une deuxième entrée négative ce même signal de sortie mais par l'intermédiaire d'une ligne à retard (66, 67) égal à 3T/4 ;

(C) des premier et deuxième multiplicateurs (69, 70) destinés à recevoir, sur une première entrée, respectivement le signal de sortie du premier sommateur (63) et celui du deuxième sommateur (64), chacun par l'intermédiaire d'un échantillonneur (71 ou 72) et d'un intégrateur (73 ou 74) placés en série, les instants d'échantillonnage des premier et deuxième échantillonneurs (71, 72) étant espacés de T/2 ;

(D) un oscillateur local (76) fixant l'instant d'échantillonnage du premier échantillonneur (71) puis, à l'aide d'un inverseur (75), celui du deuxième échantillonneur (72) ;

(E) un déphaseur (77) de $\pi/2$ du signal de sortie de l'oscillateur (76), le signal de sortie de ce déphaseur (77) et celui de l'oscillateur (76) qui est délivré au premier échantillonneur (71) étant envoyés vers la deuxième entrée respectivement du premier multiplicateur (69) et du deuxième multiplicateur (70) ;

(F) un additionneur (78) destiné à recevoir le signal de sortie de chacun des premier et deuxième multiplicateurs (69, 70), le signal de sortie de cet additionneur (78) étant envoyé vers l'horloge du circuit de décision (3).

5. Système de réception de données numériques transmises, après modulation linéaire, par l'intermédiaire d'un canal (CT) éventuellement variable dans le temps et à bande passante limitée, ce système comprenant essentiellement un circuit de filtrage (1) du signal de sortie du canal suivi d'un circuit de décision (3) destiné à effectuer, à partir du signal de sortie du circuit de filtrage et au rythme d'une horloge associée à ce circuit de décision et dont la fréquence et la phase sont déterminées par un circuit de récupération de rythme (2) permettant une décision qui minimise le taux d'erreur, une estimation et une reconstruction de chacune des données numériques émises à l'entrée du canal, caractérisé en ce qu'il comprend, dans le circuit de récupération de rythme (2), un circuit de récupération de phase (2a ou 2b) selon l'une des revendications 2 à 4.

## Claims

1. A method of controlling the clock phase of a decision circuit in a receiving system for digital data transmitted after linear modulation over an optionally time-varying channel (CT) with limited passband, said system comprising essentially a filter circuit (1) for the output signal of the channel and a subsequent decision circuit (3) for effectuating an estimation and a reconstruction of each of the transmitted digital data at the input of the channel on the basis of the output signal of the filter circuit and in the rhythm of a clock which is associated with this decision circuit and whose frequency and phase are determined by a clock recovery circuit (2) permitting a decision which minimizes the error rate, characterized in that the method comprises the following steps :

(A) imposing on the filter circuit a transfer function such that this circuit eliminates or reduces to a negligible level the frequencies above 1/T from the received frequency spectrum and that the average energy E of its output signal as a function of the time t and of the symbol period T of the transmitted data at the input of the channel is defined only by an expression of the type $E = A + B \cdot \cos 2\pi t/T$, A and B being two constant or slowly varying positive real coefficients ;

(B) estimating the phase deviation $\phi_E$ between the value $\phi_M = 2\pi t_M/T$ maximizing the expression for E and the value $\phi = 2\pi t/T$ corresponding to the value of the average energy of the output signal of the filter circuit at a sampling instant t preceding the clock phase control ; and

(C) shifting the decision instants fixed by the clock over a time $t_E = (\phi - \phi_M) T/2\pi$, taking its sign into consideration.

2. A phase recovery circuit arranged for performing the method as claimed in Claim 1, characterized in that this circuit comprises :

(A) a low-pass filter circuit (1) having a transfer function such that this circuit eliminates or reduces to a negligible level the frequencies above 1/T from the received frequency spectrum and that the average energy E of its output signal as a function of the time t and the symbol period T of the transmitted data at the input of the channel is defined only by an expression of the type $E = A + B \cdot \cos 2\pi t/T$, A and B being two constant or slowly varying positive real coefficients ;

(B) an evaluation circuit for determining the phase deviation $\phi_E$ between the value $\phi_M = 2\pi t_M/T$ maximizing the expression for E and the value $\phi = 2\pi t/T$ corresponding to the value of the average energy of the output signal of the filter circuit at a sampling instant t preceding the clock phase control ; and

(C) a phase shifting circuit for shifting the decision instants fixed by the clock over a time $t_E = (\phi - \phi) T/2\pi$, taking its sign into consideration.

3. A phase recovery circuit as claimed in Claim 2, characterized in that the evaluation and phase shifting circuits (2a) comprise :

(A) a squaring circuit (21) for receiving the output signal of the low-pass filter circuit (1a) ;

(B) first, second, third and fourth parallel-arranged sampling circuits (22, 23, 24, 25), each receiving the output signal of the squaring circuit (21) and their sampling instants being regularly spaced by T/4 ;

(C) first and second summing circuits (27, 28) receiving at a first, positive input the respective output signals of the first and the second sampling circuits (22, 23) and at a second, negative input the respective output signals of the third and fourth sampling circuits (24, 25) ;

(D) first and second multipliers (29, 30) receiving at a first input the respective output signals of the first (27) and the second (28) summing circuits, each through a series arrangement of an integrator (31 or 32) and an amplifier (33 or 34) ;

(E) a local oscillator (26) which fixes the sampling instant of the first sampling circuit (22) and, further, by means of a $\pi/2$ phase shifter (37), the sampling instant of the second sampling circuit (23), said oscillator (26) and phase shifter (37) output signals also being applied to the second input of the second multiplier (30) and of the first multiplier (29), respectively, and being further applied to the third and fourth sampling circuits (24, 25), respectively, through two inverter circuits (39, 40) ;

(F) an adder (38) receiving the output signal of each of the first and second multipliers (29, 30), the output signal of this adder being applied to the clock of the decision circuit (3).

4. A phase recovery circuit as claimed in Claim 2, characterized in that the evaluation and phase shifting circuits (2b) comprise in succession :

(A) a squaring circuit (61) receiving the output signal of the low-pass filter circuit (1b) ;

(B) a first summing circuit (63) receiving at a first, positive input the output signal of the squaring circuit (61) and at a second, negative input this same output signal through a delay line (65) having a time delay equal to T/2, and a second summing circuit (64) receiving at a first, positive input the output signal of the squaring circuit (61) through a delay line (66) having a time delay equal to T/4 and at a second, negative input this same output signal through a delay line (66, 67) having a time delay 3T/4 ;

(C) first and second multipliers (69, 70) receiving at a first input the respective output signals of the first (63) and of the second summing circuit (64), each through a series arrangement of a sampling circuit (71 or 72) and an integrator (73 or 74), the sampling instant of the first and the second sampling circuits (71, 72) being spaced by T/2 ;

(D) a local oscillator (76) which fixes the sampling instant of the first sampling circuit (71) and further by means of an inverter circuit (75), the sampling instant of the second sampling circuit (72) ;

(E) a $\pi/2$ phase shifter (77) for the output signal of the oscillator (76), the output signal of this phase shifter (77) and the output signal of the oscillator (76) applied to the first sampling circuit (71) being applied to the second input of the first multiplier (69) and of the second multiplier (70), respectively ;

(F) an adder (78) receiving the output signal of the first and second multipliers (69, 70), the output signal of this adder (78) being applied to the clock of the decision circuit (3).

5. A receiving system for digital data which, after linear modulation, are transmitted over an optionally time-varying channel (CT) with limited passband, this system comprising essentially a filter circuit (1) for the output signal of the channel and a subsequent decision circuit (3) for effectuating an estimation and a reconstruction of each of the transmitted digital data at the input of the channel on the basis of the output signal from the filter circuit and in the rhythm of a clock which is associated with this decision circuit and whose frequency and phase are determined by a clock recovery circuit (2) permitting a decision which minimizes the error rate, characterized in that the clock recovery circuit (2) comprises a phase recovery circuit (2a or 2b) as claimed in any one of the Claims 2 to 4.

**Ansprüche**

1. Verfahren zur Regelung der Taktphase der Entscheidungsschaltung in einem Empfangssystem für digitale Daten, die nach linearer Modulation über einen gegebenenfalls zeitveränderlichen Kanal (CT) mit einem begrenzten Durchlassband übertragen werden, wobei das genannte System im wesentlichen eine Filterschaltung (1) für das Ausgangssignal des Kanals sowie eine nachfolgende Entscheidungsschaltung (3) enthält zum Durchführen einer Schätzung und einer Rekonstruktion der übertragenen digitalen Daten an dem Eingang des Kanals auf Basis des Ausgangssignals der Filterschaltung und im Rhytmus eines Taktes, der dieser Entscheidungsschaltung zugeordnet ist und dessen Frequenz und Phase durch eine Taktrückgewinnungsschaltung (2) bestimmt werden, die eine Entscheidung ermöglicht, die die Fehlerrate minimalisiert, dadurch gekennzeichnet, dass das Verfahren die folgenden Schritte umfasst :

(A) das Zuordnen einer derartigen Übertragungsfunktion zur Filterschaltung, dass diese Schaltung die Frequenz über 1/T aus dem empfangenen Frequenzspektrum entfernt oder auf einen vernachlässigbaren Pegel beschränkt und dass die mittlere Energie des Ausgangssignals als Funktion der Zeit t und der Symbolperiode T der übertragenen Daten an dem Eingang des Kanals nur durch einen Ausdruck vom Type $E = A + B \cdot \cos 2\pi\, t/T$ definiert wird, wobei A und B zwei konstante oder sich nur langsam ändernde positive reelle Koeffizienten sind ;

(B) das Bewerten der Phasenabweichung $\phi_E$ zwischen dem Wert $\phi_M = 2\pi\, t_M/T$, der den Ausdruck für E maximalisiert, und dem Wert $\phi = 2\pi\, t/T$, der dem Wert der mittleren Energie des Ausgangssignals der Filterschaltung zu dem Abtastzeitpunkt t vor der Taktphasenregelung entspricht ;

(C) das Verschieben der durch den Takt festgelegten Entscheidungszeitpunkte um' eine Zeit $t_E = (\phi - \phi_M)\, T/2$, wobei das Vorzeichen berücksichtigt wird.

2. Phasenrückgewinnungsschaltungsanordnung zum Durchführen des Verfahrens nach Anspruch 1, dadurch gekennzeichnet, dass diese Schaltungsanordnung die folgenden Elemente umfasst :

(A) eine Tiefpassfilterschaltung (1) mit einer derartigen Übertragungsfunktion, dass diese Schaltung die Frequenzen über 1/T aus dem empfangenen Frequenzspektrum entfernt oder auf einen vernachlässigbaren Pegel beschränkt und dass die mittlere Energie des Ausgangssignals als Funktion der Zeit t und der Symbolperiode T der übertragenen Daten an dem Eingang des Kanals nur durch einen Ausdruck vom Type $E = A + B \cdot \cos 2\pi\, t/T$ definiert wird, wobei A und B zwei konstante oder sich nur langsam ändernde positive reelle Koeffizienten sind ;

(B) eine Bewertungsschaltung zum Bestimmen der Phasenabweichung $\phi_E$ zwischen dem Wert $\phi_M = 2\pi\, t_M/T$, der den Ausdruck für E maximalisiert, und dem Wert $\phi = 2\pi\, t/T$, der dem Wert der mittleren Energie des Ausgangssignals der Filterschaltung zu dem Abtastzeitpunkt t vor der Taktphasenregelung entspricht ;

(C) eine Phasenverschiebungsschaltung zum Verschieben der durch den Takt festgelegten Entscheidungszeitpunkte um eine Zeit $t_E = (\phi - \phi_M)\, T/2$, wobei das Vorzeichen berücksichtigt wird.

3. Phasenrückgewinnungsschaltungsanordnung nach Anspruch 2, dadurch gekennzeichnet, dass die Bewertungs- und Phasenverschiebungsschaltung (2a) folgende Elemente umfasst :

(A) eine Quadrierschaltung (21) für das Ausgangssignal der Tiefpassfilterschaltung (1a) ;

(B) erste, zweite, dritte und vierte parallel angeordnete Abtastschaltungen (22, 23, 24 bzw. 25), die je das Ausgangssignal der Quadrierschaltung (21) erhalten, wobei ihre Abtastzeitpunkte um einen regelmässigen Abstand von T/4 auseinander liegen ;

(C) erste und zweite Summierschaltungen (27, 28), die an einem ersten positiven Eingang die Ausgangssignale der ersten bzw. zweiten Abtastschaltungen (22, 23) erhalten und an einem zweiten negativen Eingang die Ausgangssignale der dritten bzw. vierten Abtastschaltungen (24, 25) ;

(D) erste und zweite Multiplizierer (29, 30), die an einem ersten Eingang je die Ausgangssignale der ersten (27) und der zweiten (28) Summierschaltungen über eine Reihenschaltung aus einem Integrator (31 oder 32) und einem Verstärker (33 oder 34) erhalten ;

(E) einen Ortsoszillator (26), der den Abtastzeitpunkt der ersten Abtastschaltung (22) und ausserdem, mittels eines $\pi/2$-Phasenverschieber (37), den Abtastzeitpunkt der zweiten Abtastschaltung (23) festlegt, wobei die Ausgangssignale des Oszillators (26) und des Phasenverschiebers (37) ebenfalls dem zweiten Eingang des zweiten (30) und des ersten (29) Multiplizierer zugeführt werden und weiterhin, mittels zweier Inverterschaltungen (39, 40), den dritten bzw. vierten Abtastschaltungen (24, 25) zugeführt werden ;

(F) eine Addierschaltung (38), die das Ausgangssignal jedes der ersten und zweiten Multiplizierer (29, 30) erhält, wobei das Ausgangssignal dieser Addierschaltung dem Takteingang der Entscheidungsschaltung (3) zugeführt wird.

4. Phasenrückgewinnungsschaltungsanordnung nach Anspruch 2, dadurch gekennzeichnet, dass die Bewertungs- und Phasenverschiebungsschaltung (2b) nacheinander die folgenden Elemente enthält :

(A) eine Quadrierschaltung (61) für das Ausgangssignal der Tiefpassfilterschaltung (1b) ;

(B) eine erste Summierschaltung (63), die an einem ersten positiven Eingang das Ausgangssignal der Quadrierschaltung (61) und an einem zweiten negativen Eingang dasselbe Ausgangssignal über eine Verzögerungsleitung (65) mit einer Zeitverzögerung gleich T/2 erhält, und eine zweite Summierschaltung (64), die an einem ersten positiven Eingang das Ausgangssignal der Quadrierschaltung (61) über eine Verzögerungsleitung (66) mit einer Zeitverzögerung gleich T/4 und an einem zweiten negativen Eingang dasselbe Ausgangssignal über eine Verzögerungsleitung (66, 67) mit einer Zeitverzögerung gleich 3T/4 erhält ;

(C) erste und zweite Multiplizierer (69, 70), die an einem ersten Eingang die Ausgangssignale der ersten (63) bzw. zweiten Summierschaltung (64) je über eine Reihenschaltung aus einer Abtastschaltung (71 oder 72) uhnd einem Integrator (73 oder 74) erhalten, wobei die Abtastzeitpunkte der ersten und der zweiten Abtastschaltungen (71, 72) um einen Abstand von T/2 auseinanderliegen ;

(D) einen Ortsoszillator (76), der den Abtastzeitpunkt der ersten Abtastschaltung (71) und mittels einer Invertersschaltung (75) den Abtastzeitpunkt der zweiten Abtastschaltung (72) festlegt ;

(E) einen $\pi/2$-Phasenverschieber (77) für das Ausgangssignal des Oszillators (76), wobei das Ausgangssignal dieses Phasenverschiebers (77) und das der ersten Abtastschaltung (71) zugeführte Ausgangssignal des Oszillators (76) dem zweiten Eingang des ersten Multiplizierers (69) bzw. des zweiten Multiplizierers (70) zugeführt wird.

(F) eine Addierschaltung (78), die das Ausgangssignal der ersten und der zweiten Multiplizierer

**0 035 295**

(69, 70) erhält, wobei das Ausgangssignal dieser Addierschaltung (78) dem Takteingang der Entscheidungsschaltung (3) zugeführt wird.

5. Ein Empfangssystem für digitale Daten, die, nach linearer Modulation, über einen gegebenenfalls zeitveränderlichen Kanal (CT) mit einem beschränkten Durchlassband übertragen werden, wobei dieses System im wesentlichen eine Filterschaltung (1) enthält für das Ausgangssignal des Kanals sowie eine darauffolgende Entscheidungsschaltung (3) zum Durchführen einer Schätzung und einer Rekonstruktion der übertragenen digitalen Daten an dem Eingang des Kanals auf Basis des Ausgangssignals der Filterschaltung und im Rhytmus eines Taktes, der dieser Entscheidungsschaltung zugeordnet ist und dessen Frequenz und Phase durch eine Taktrückgewinnungsschaltung (2) bestimmt werden, die eine Entscheidung ermöglicht, die die Fehlerrate minimalisiert, dadurch gekennzeichnet, dass die Taktrückgewinnungsschaltung (2) eine Phasenrückgewinnungsschaltungsanordnung (2a oder 2b) nach einem der Ansprüche 2 bis 4 enthält.

11

FIG.1

FIG.2

FIG.3

0 035 295

FIG.4

FIG.5

2